(19) Europäisches Patentamt
European Patent Office
Office européen des brevets

(11) Veröffentlichungsnummer : **0 073 796
B1**

(12) **EUROPÄISCHE PATENTSCHRIFT**

(45) Veröffentlichungstag der Patentschrift :
**09.10.85**

(21) Anmeldenummer : **82900795.4**

(22) Anmeldetag : **12.03.82**

(86) Internationale Anmeldenummer :
**PCT/DE 82/00059**

(87) Internationale Veröffentlichungsnummer :
**WO/8203266 (30.09.82 Gazette 82/23)**

(51) Int. Cl.⁴ : **F 24 J 3/00, F 25 B 49/00**

(54) **VERFAHREN ZUM REGELN EINER SORPTIONSWÄRMEPUMPE.**

(30) Priorität : **14.03.81 DEU 8107913**

(43) Veröffentlichungstag der Anmeldung :
**16.03.83 Patentblatt 83/11**

(45) Bekanntmachung des Hinweises auf die Patenterteilung : **09.10.85 Patentblatt 85/41**

(84) Benannte Vertragsstaaten :
**AT CH DE FR GB LI LU NL SE**

(56) Entgegenhaltungen :
**EP-A- 0 001 858
EP-A- 0 010 551
EP-A- 0 038 990
DE-A- 1 401 483
DE-A- 2 854 055
DE-C-  718 956
DE-C-  973 197
FR-A- 2 104 168
GB-A- 2 047 865
US-A- 2 272 871
US-A- 3 527 061**

(73) Patentinhaber : **Joh. Vaillant Gmbh u. Co
Berghauser Strasse 40 Postfach 10 10 20
D-5630 Remscheid 1 (DE)
DE LU SE
VAILLANT S.A.R.L
4, Rue des Oliviers Orly-Sénia 326
F-94537 Rungis Cedex (FR)
FR
VAILLANT Ges.m.b.H
Forchheimergasse 7 Postfach 56
A-1233 Wien (AT)
AT
Vaillant Ltd.
Vaillant Building, Aerodrome Way Heston Industrial Estate
GB-Hounslow, Middx. TW5 9QB (GB)
GB
SCHONEWELLE B.V.
Ellermanstraat 17
NL-1099 BX Amsterdam (NL)
NL
Vaillant GmbH
Riedstrasse 8
CH-8953 Dietikon 1 (CH)
CH LI**

Jouve, 18, rue St-Denis, 75001 Paris, France

(72) Erfinder : KANTNER, Alexander
Paul-Windgassen-Strasse 99
D-5630 Remscheid 11 (DE)

(74) Vertreter : Heim, Johann-Ludwig
c/o Joh. Vaillant GmbH u. Co Postfach 10 10 20
Berghauser Strasse 40
D-5630 Remscheid 1 (DE)

## Beschreibung

Die vorliegende Erfindung bezieht sich auf ein Verfahren zum Regeln einer Sorptionswärmepumpe gemäß dem Oberbegriff des Anspruches 1.

Solche Sorptionswärmepumpen, seien es Absorptions- oder Resorptionswärmepumpen, werden in zunehmenden Maße zur Beheizung von Wohnhäusern eingesetzt. Hier sollen diese Wärmepumpen Umlaufwasserheizer oder Kessel als Wärmequellen ersetzen. Die Verbraucher solcher Wärmepumpen bestehen in der Regel aus Fußboden-, Radiatoren- oder Konvektorenheizungen, in der Regel mit Thermostatventilen ausgerüstet, und Brauchwasserspeichern.

Aus der EP-A-1 858 ist eine Sorptionswärmepumpe bekanntgeworden, die zwei Arbeitsweisen besitzt. Befindet sich die Umgebungstemperatur oberhalb einer bestimmten Grenzschwelle, arbeitet das System als Wärmepumpe. Hierzu wird über einen Druckfühler der Druck des Kältemittels im Verdampfer abgefühlt und bei Unterschreiten dieser Druckschwelle die Anlage im reinen Kesselbetrieb betrieben, indem der Verdampfer aus dem Wärmepumpenkreislauf herausgenommen wird. Das System weist einen Druckfühler auf, um den Druck im Austreiber, das heißt im Hochdruckteil der Wärmepumpe, zu messen. Eine Druckregelung findet nicht statt, denn ein vom Druck abgeleitetes Signal wird nur zur Betriebsartumschaltung zwischen Wärmepumpenbetrieb und reinem Kesselbetrieb benutzt.

Weiterhin ist es aus der DE-A-2 854 055 bekanntgeworden, dem Verdampfer einer Wärmepumpe ein temperaturgesteuertes Ventil zur Regelung des Durchsatzes von Kältemitteldampf vorzuschalten. Dieses Expansionsventil ist als selbststeuerndes, in Abhängigkeit von der Temperatur des den Verdampfer verlassenden Dampfes regelndes Ventil ausgebildet. Dieses Ventil erfasst somit nicht die Temperatur der den Verdampfer speisenden Wärmequelle.

Der vorliegenden Erfindung liegt die Aufgabe zu Grunde, daß in eine Druck- oder Temperaturregelung im Hochdruckteil einer Sorptionswärmepumpe der Wärmeinhalt der auf den Verdampfer einwirkenden Umweltenergiequelle nach Temperatur und Durchsatz berücksichtigt werden kann.

Diese Aufgabe wird erfindungsgemäß bei einem Verfahren gemäß dem Oberbegriff durch die im kennzeichnenden Teil des Anspruchs 1 angegebenen Maßnahmen gelöst.

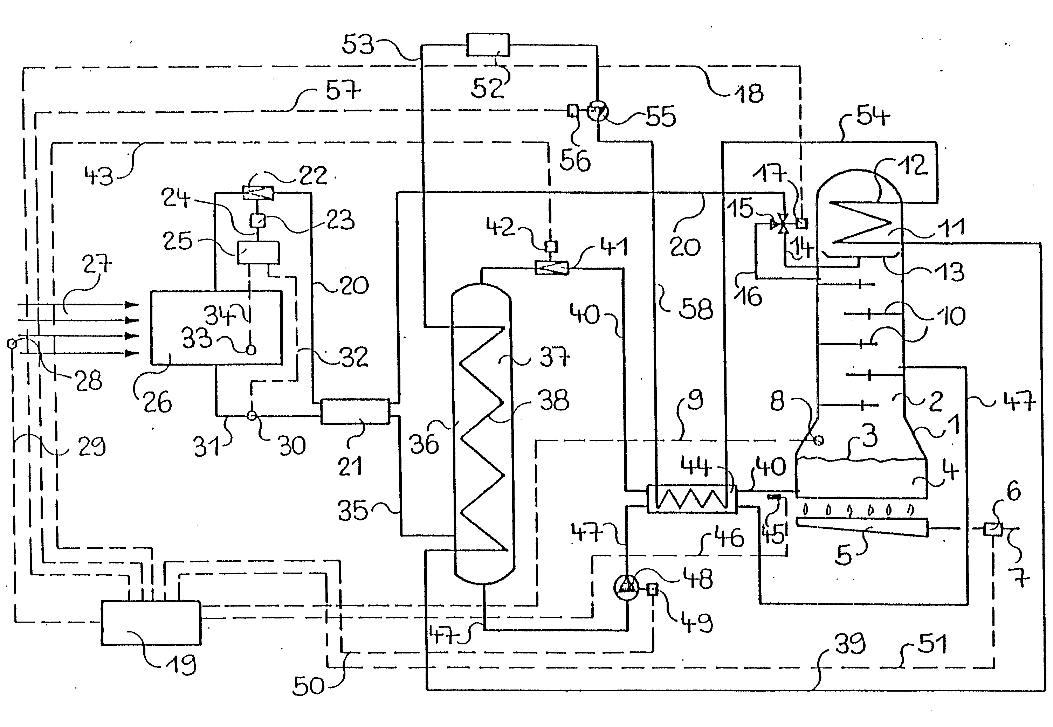

Weitere Ausgestaltungen und besonders vorteilhafte Weiterbildungen des erfindungsgemäßen Verfahrens sind aus den Unteransprüchen sowie der nachfolgenden Beschreibung ersichtlich, die ein Ausführungsbeispiel der Erfindung anhand der Figur der Zeichnung näher erläutert.

Ein Austreiber 1 ist in seinem Innenraum 2 bis zu einem Pegel 3 mit einer armen Lösung 4 eines Gemisches Ammoniak-Wasser gefüllt, der Austreiber wird von einem Gasbrenner 5 gespeist, der über eine mit einem Magnetventil 6 versehene Gasleitung 7 mit Brennstoff versorgt wird. In den Innenraum 2 ragt ein Niveaufühler 8, der an eine Meßleitung 9 angeschlossen ist.

Im mittleren Bereich des Austreibers sind Überlaufböden 10 vorgesehen, im Kopf des Austreibers ist ein Kondensator 11 angeordnet, der aus einer Wärmetauscherrohrschlange 12 mit darunter befindlicher Auffangschale 13 besteht. Von der Auffangschale führt eine Kondensatleitung 14 zu einem Dreiwegeventil 15, dessen einer Anschluß über eine Kondensatrücklaufleitung 16 wieder in den Innenraum 2 führt, und zwar mündet die Leitung 16 oberhalb des obersten Überlaufbodens 10. Das Dreiwegeventil 15 weist einen Antriebsmotor 17 auf, der über eine Stelleitung 18 mit einer Druck-/Temperaturregeleinheit 19 für den Druck oder die Temperatur im Hochdruckteil der Sorptionswärmepumpe verbunden ist, an die auch die Leitung 9 angeschlossen ist.

Der zweite Anschluß des Dreiwegeventils 15 ist an einer Kondensatleitung 20, die von einem Druck- oder Temperaturfühler als Meßwertgeber für die Regeleinheit 19 abgefühlt ist, angeschlossen, die zu einem Kältewechsler 21 führt. Hinter dem Kältewechsler setzt sich die Leitung 20 fort und führt zu einem Expansionsventil 22, dessen Drosselquerschnitt von einem Stellglied 23 gesteuert werden kann, das über eine Leitung 24 mit einem Durchsatzregler 25 verbunden ist. Dem Expansionsventil 22 nachgeschaltet ist ein Verdampfer 26, der von einer Umweltenergiequelle 27, beispielsweise Umgebungsluft, beaufschlagt wird. Die Temperatur dieser Umweltenergiequelle kann über einen Temperaturfühler 28 erfaßt werden, der über eine Meßleitung 29 mit der Regeleinheit 19 verbunden ist. Da der Durchsatz von Luft durch den Verdampfer auch über ein Gebläse erfolgen kann, kann auch ein Durchsatzmesser im Luftkanal vorgesehen sein, der mit einer entsprechenden Meßleitung mit der Regeleinheit 19 zu verbinden wäre.

Stromab des Verdampfers ist im Kältemittelkreis eine mit einem Temperaturfühler 30 versehene Kältemitteldampfleitung 31 vorgesehen, die zum Kältewechsler 21 führt. Der Temperaturfühler 30 ist über eine Leitung 32 mit den Durchsatzregler 25 verbunden, im Bereich des Verdampfers kann ein weiterer Temperaturfühler 33 vorgesehen sein, der der Luft ausgesetzt ist und der über eine Leitung 34 mit dem Durchsatzregler 25 in Verbindung steht.

Vom Kältewechsler 21 führt eine Kältemitteldampfleitung 35 als Fortsetzung der Leitung 31 zu einem Absorber 36.

Den Innenraum 37 des Absorbers 36 durchsetzt eine Wärmetauscherrohrschlange 38, die über eine Leitung 39 mit der Rohrschlange 12 verbunden ist.

An den Innenraum des Absorbers ist eine Leitung 40 angeschlossen, in der ein Expansionsventil 41 vorgesehen ist, das über ein Stellglied 42 und eine Stelleitung 43 ansteuerbar ist, die ihrerseits mit der Regeleinheit 19 verbunden ist. Im Zuge der Leitung 40 ist weiterhin ein Wärmetauscher 44 vorgesehen. Die Leitung ist schlußendlich mit dem Austreiber 1 verbunden, sie mündet in den Innenraum 2 des Austreibers 1 unterhalb des Pegels 3 für arme Lösung. An der Leitung 40 liegt ein Temperaturfühler 45 an, der über eine Meßleitung 46 mit der Regeleinheit 19 verbunden ist.

An den Absorber 36 ist im Bereich des unteren Endes eine Leitung 47 für reiche Lösung angeschlossen, in der eine Umwälzpumpe 48 vorgesehen ist, deren Motor über ein Stellglied 49 im Sinne einer Durchsatzänderung ansteuerbar ist, wobei das Stellglied 49 über die Stelleitung 50 mit der Regeleinheit 19 verbunden ist.

Die Leitung 47 führt hinter der Pumpe 48 zum Wärmetauscher 44 und von dort in einen mittleren Bereich der Höhe des Austreibers 1 oberhalb eines Überlaufbodens 10.

Das Magnetventil 6 ist über eine Leitung 51 gleichfalls mit der Regeleinheit 19 verbunden.

Ein Verbraucher 52 der Wärmepumpe, dies kann eine Fußbodenheizung eines Wohn- oder Geschäftshauses ebenso sein wie eine Radiatoren- oder Konvenktorenheizung oder ein Brauchwasserspeicher oder auch eine Parallel- oder Serienschaltung mehrerer solcher Verbraucher, ist mit seiner Rücklaufleitung 53 unmittelbar mit der Rohrschlange 38 im Absorber 36 verbunden. Das Wärmetauscherrohr 12 steht über einer Wasserleitung 54 mit dem Wärmetauscher 44 in Verbindung, von wo die mit einer Umwälzpumpe 55 versehene Vorlaufleitung 58 den Verbraucher 52 speist. Der Motor der Umwälzpumpe 55 ist durch ein Stellglied 56, im Sinne einer Durchsatzvariation beaufschlagt. Zu dem Stellglied 56 führt eine von der Regeleinheit 19 kommende Stelleitung 57.

Den Bereich des Kältemitteldampfteils von Innenraum 2 des Austreibers 1 über das Dreiwegeventil, die Leitung 20 bis zum Expansionsventil 22 kann man als Hochdruckteil der Anlage auffassen. Gleichzeitig erstreckt sich der Hochdruckteil auch noch im Bereich der armen Lösung, das heißt über die Leitung 40, den Wärmetauscher 44 bis zum lösungsmittelseitigen Expansionsventil 41.

Die bislang beschriebene Wärmepumpe samt ihrer Regelkomponenten weist folgende Funktionen auf : Für die Funktionsweise wird zunächst davon ausgegangen, daß die Außentemperatur im Bereich der Umweltenergiequelle und ihr Durchsatz durch den Verdampfer konstant sind. Das heißt, der Temperaturfühler 28 gibt denselben beziehungsweise nahezu den gleichen Meßwert ab. Das bedeutet, daß der Verdampfer 26 laufend die gleiche Energiemenge in der Zeiteinheit aufnimmt. Somit wird auch der Verbraucher, insbesondere im Falle thermostatventilgesteuerter Heizkörper, die gleiche Wärmeanforderung aufweisen. Diese Wärmeanforderung kann ermittelt werden aus der Höhe der Rücklauftemperatur, also mittels eines an der Leitung 53 angebrachten Temperaturfühlers. Ergänzend hierzu kann auch die Vorlauftemperatur herangezogen werden, beispielsweise über einen dort an der Leitung 56 angebrachten Temperaturfühler. Beide Temperaturmeßwerte könnte man auf die Regeleinheit 19 über Meßleitungen aufschlagen. Da der Durchsatz des Heizungsfluids aufgrund des Fördervolumens und der Drehzahl der Umwälzpumpe 55 bekannt ist, kann damit die vom Verbraucher der Wärmepumpe entzogene Leistung ermittelt werden. Somit wird der Verbraucher 52 über die Wärmetauscher 38, 12 und 44 dem Kältemittelkreis der Sorptionswärmepumpe eine bestimmte Wärmeleistung entziehen. Diese Wärmeleistung hängt im wesentlichen von der Außentemperatur, dem Aufstellungsort der Wärmepumpe und dem Verbraucherverhalten ab, das beispielsweise eine gewünschte Innenraumtemperatur vorgeben kann. Über den Aufstellungsort kann man im Rahmen von Klimazonen Angaben entnehmen, so daß man den Sollwertgeber im Bereich der Regeleinheit 19 eine Heizkurve vorgeben kann, das heißt einen bestimmten Wärmebedarf für den Verbraucher, ausgedrückt in Werten der Verlaufoder Rücklauftemperatur beziehungsweise der Differenz zwischen beiden und dem Durchsatz. Bei abweichenden Bedürfnissen des Verbrauchers (besonders hohe Raumtemperatur) müßte man einen abweichenden Sollwert im Sollwertgeber der Regeleinheit einstellen. Der Sollwert des Druckes im Hochdruckteil der Wärmepumpe ist somit in Abhängigkeit vom Betriebsort, der Außentemperatur und der gewünschten Raumtemperatur beziehungsweise Speichertemperatur eines Brauchwasserspeichers geführt. Der Druck beziehungsweise die Temperatur im Hochdruckteil der Wärmepumpe ist weiterhin variabel nach der Art und gegebenenfalls der Änderung der Heizungsanlage geführt, beispielsweise, wenn zu der Heizungsanlage ein Brauchwasserspeicher parallel in Betrieb geht.

Unter Berücksichtigung dieser Kriterien ist somit einleuchtend, daß bei einer bestimmten Leistungsaufnahme im Verdampfer 26 dem Austreiber oder Kocher 1 über den Brenner 5 eine bestimmte Energiemenge in der Zeiteinheit zugeführt werden muß, um die Wärmebilanz des Kältemittelkreislaufs der Wärmepumpe aufrechtzuerhalten. Gleichermaßen muß der Motor der Lösungsmittelumwälzpumpe 48 entsprechend über das Stellglied 49 gestellt werden, um den der Wärmebilanz entsprechenden Lösungsmittelumlauf sicherzustellen.

Es hat sich gezeigt, daß zu einer bestimmten Wärmelieferung an den Verbraucher ein bestimmter Druck im Hochdruckteil der Wärmepumpe oder eine bestimmte Temperatur im Kocher beziehungsweise im Kondensator einzuhalten wesentlich ist, um die der Wärmepumpe über den Brenner 5 zugeführte Primärenergie zu minimieren. Somit wird über einen Druck- beziehungsweise Temperaturfühler im Hochdruckteil beziehungsweise im Kondensator oder Kocher der Kondensatordruck überwacht und gemessen und auf die Regeleinheit 19 gegeben. Dieser Kondensatordruck beziehungsweise die Kondensatortemperatur wird mit dem Sollwert verglichen, der dem Sollwertgeberder Regeleinheit 19 gleitend beziehungsweise justiert vorgegeben ist. Somit ergibt sich die Regelabweichung aus Kondensatordruck und Kondensatortemperatur beziehungsweise Sollwert, die zu Null gebracht wird, indem die Stellglieder des Reglers, nämlich das Stellglied 49 und das Gasmagnetventil 6, entsprechend verstellt werden. Hierbei ist vorzusehen, zunächst die Stellgröße des Brennstoffdurchsatzes über das Magnetventil 6 zu verstellen und anschließend den Durchsatz der Lösungsmittelpumpe nachzuführen. Bei fallendem Druck beziehungsweise fallender Temperatur im Austreiber 1 wird der Brennstoffdurchsatz zuerst erhöht und der Durchsatz von reicher Lösung durch die Lösungsmittelpumpe erhöht und umgekehrt.

Der Regler für die Wärmepumpenanlage führt somit bei konstantem Temperaturverhalten der Umweltenergiequelle und konstanten Verbraucherverhalten zu einem stationären Zustand.

Dieser stationäre Zustand ändert sich einmal bei einem abweichenden Verbraucherverhalten (gewünschte andere Raumtemperatur beziehungsweise zusätzliche Belastung der Wärmepumpe durch parallelgeschalteten Speicher, der nach einem Duschvorgang nachzuladen ist), der stationäre Zustand kommt aber auch aus dem Gleichgewicht, wenn sich die Temperatur der Umweltenergiequelle oder ihr Durchsatz durch den Verdampfer ändert. Sinkt beispielsweise bei einem stationären Zustand der Wärmepumpenanlage unter einstweiliger Beibehaltung des Verbraucherzustands die Temperatur Ta der Außenluft, so hat dies ein entsprechendes fallendes Signal des Fühlers 28 zur Folge, das über die Meßleitung 29 der Regeleinheit 19 mitgeteilt wird.

Eine Temperaturabnahme im Luftstrom 27 hat zur Folge, daß dem Verdampfer 26 ein kleinerer Energiestrom von der Umweltenergiequelle zugeführt wird, das heißt, der Durchsatz an verdampftem Kältemittel in der Leitung 31 nimmt ab. Gleichzeitig sinken die Temperatur und der Druck des verdampften Kältemittels. Da aber zunächst über das Expansionsventil 22 unverändert Kältemittel in flüssiger Form in den Verdampfer über die Leitung 20 nachgeschoben wird, so daß der Verdampfer sich mit flüssigem Kältemittel anreichert, wird seine Verdampfungsfähigkeit noch weiter herabgesetzt. Wenn der im Verdampfer angeordnete Temperaturfühler 33 ein Ansteigen des flüssigen Kältemittels im Verdampfer über eine bestimmte Grenze anzeigt, resultiert ein entsprechendes Signal auf der Leitung 34 zum Regler 25. Gleichermaßen resultiert eine fallende Temperatur in der Kältemitteldampfleitung 31. Das entsprechende Signal wird von Temperaturfühler 30 ermittelt und über die Leitung 32 auf den Regler 25 weitergegeben. Aus der Temperaturdifferenz zwischen den Meßwerten der Fühler 30 und 28 ist es nun möglich, dem Querschnitt des Expansionsventils 22 eine optimale Öffnung über das Stellglied 23 vom Regler 25 zu geben, damit gerade ein solcher Kältemitteldurchsatz im Verdampfer 26 aufrechterhalten wird, der gerade noch verdampft werden kann, ohne daß das Kältemittelniveau im Verdampfer steigt.

Es wäre weiterhin möglich, den Durchlaßquerschnitt des Expansionsventils 22 im Zuge der Kältemitteldampfleitung 20 in Abhängigkeit vom Druck und von der Temperatur im Niederdruckteil der Sorptionswärmepumpe zu verstellen. Der Niederdruckteil der Sorptionswärmepumpe ist hierbei der Teil im Kältemittelweg stromab des Expansionsventils 22 bis zur Lösungsmittelpumpe, im Zuge des Lösungsmittelweges der Teil stromab des Expansionsventils 41 gleichermaßen bis zur Lösungsmittelpumpe.

Weiterhin wäre es auch möglich, den Durchlaß des Kältemittelexpansionsventils 22 als Funktion des Drucks und der Temperatur im Hochdruckteil der Anlage zu führen.

Fällt also demgemäß die Temperatur der Umweltenergiequelle, so wird zunächst im Regelkreis 30, 32, 33, 34, 25, 23, 22 der Kältemitteldampf-Durchsatz nachgestellt. Ein Drosseln des Kältemitteldampf-Durchsatzes durch den Verdampfer hat aber einen Rückstau flüssigen Kältemittels in der Leitung 20 zur Folge. Das bedeutet, daß die Regeleinheit 19 aus dem Differenztemperatursignal zwischen den Meßwerten der Fühler 28 und 30 ein Stellsignal über die Leitung 18 auf das Stellglied 17 gibt, um einen größeren Anteil von flüssigem Kältemittel aus der Leitung 14 direkt zurück in den Austreiber über die Leitung 16 zu geben. Mithin wird in die Leitung 20 soviel flüssiges Kältemittel eingespeist, als auch bei vorgegebener Temperatur und vorgegebenem Durchsatz der Umweltenergiequelle sicher im Verdampfer stetig verdampft werden kann.

Da zu einem gedrosselten Kältemitteldurchsatz, das Kältemittel gelangt schließlich in den Absorber 36, auch eine entsprechend angepaßte Menge von armer Lösung in der Zeiteinheit gehört, resultiert auch auf das Stellglied 49, nachdem der Niveaufühler 8 angesprochen hat, über die Leitung 50 ein Stellbefehl der Regeleinheit 19, daß der Lösungsmitteldurchsatz erhöht wird. Im Bereich dieser beiden Stellgrößen, Kältemittelrückführung beziehungsweise Erhöhung des Durchsatzes an Lösungsmittel, kann der Regler 19 die Wärmepumpenanlage über einen großen Bereich optimal fahren. Sinkt die Temperatur der Umweltenergiequelle zu tief oder nimmt der Luftdurchsatz durch den Verdampfer ab und können jetzt stationäre Zustände durch Betätigen der Stellglieder 17 und 49 nicht geschaffen werden, so wird zusätzlich noch über das Stellglied 42 das Expansionsventil 41 beaufschlagt, um den dem Absorber zugeführten Durchsatz an armer Lösung aus dem Austreiber 1 zu erhöhen. Es wird demgemäß der Drosselquerschnitt des Expansionsventils 41 vergrößert. Die Änderung von Durchsatz an armer Lösung durch den Absorber 36 ist immer invers zur Änderung des Kältemitteldampf-Durchsatzes bei Änderung der Temperaturen der Umweltenergiequelle.

Dieses Regelspiel kann so weit gehen, daß bei weiterem Absinken der Temperatur der Umweltenergiequelle die Zufuhr von Kältemittel in den Verdampfer durch das Expansionsventil gänzlich unterbrochen werden kann. Die Wärmepumpe arbeitet dann in einem kesselähnlichen Betrieb, indem nämlich nur arme Lösung über den Absorber und den Wärmetauscher 44 umgewälzt wird.

Bei steigender Temperatur der Umweltenergiequelle arbeitet die Wärmepumpenanlage in umgekehrter Richtung.

Die Funktion im Bereich des Austreibers ist so, daß die vom Gasbrenner 5 erwärmte Lösungsmenge 4 erhitzt wird und Kältemitteldampf austreibt. Der Kältemitteldampf zieht nach oben ab und kondensiert an der Wärmetauscherrohrschlange 12 des Kondensators 11. Flüssiges Kältemittel tropft auf die Auffangschale 13 und wird über die Leitung 14 abgeführt. Nicht benötigtes Kältemittel wird je nach einer der stetigen Zwischenstellungen des Dreiwegeventils 15 auf die Kondensatleitung 16 zurückgegeben und fließt von Stufe zu Stufe über die Überlaufböden 10 nach unten. Hierbei findet eine Mitnahme von Kältemitteldampf nach oben durch den aufsteigenden Dampf statt. Je tiefer der Bereich ist, den man im Bereich des Austreibers 1 betrachtet, um so höher ist der Gehalt an armer Lösung. In der Nähe des Bodens beziehungsweise der Einmündung der Leitung 40 liegt also der größte Verarmungszustand der Lösung an Kältemittel vor.

Verbraucherseitig ist die Wärmepumpenanlage so geschaltet, daß das Verbraucherfluid zuerst im Absorber und dann im Kondensator aufgeheizt wird. Die letzte Aufheizung findet im Bereich des Wärmetauschers 44 statt. Mit dieser Ausgestaltung ist einmal eine Maximierung der Vorlauftemperatur des Verbrauchers erzielbar, zum zweiten sind die erzielbaren Endtemperaturen im Verbraucherfluid den Temperaturgegebenheiten der Wärmepumpenanlage angepaßt.

Ändert unabhängig von Änderungen der Temperatur der Umweltenergie der Verbraucher 52 seine Wärmeanforderung so resultieren über die Regeleinheit 19 Stellbefehle an das Gasmagnetventil 6, den Motor der Lösungsmittelpumpe und an die Heizungsumwälzpumpe 55. Einer steigenden Verbraucherwärmeanforderung ist ein größerer Durchsatz an Gas zum Brenner 5 zugeordnet, gleichermaßen ein größerer Durchsatz von Fluid durch den Verbraucher 52. Regelgröße ist in jedem Fall, gleichgültig ob die Störung vom Verbraucher oder von der Umweltenergie herrührt, der Druck im Hochdruckteil beziehungsweise die Temperatur im Hochdruckteil der Wärmepumpenanlage. Dies ist, ausgehend vom Expansionsventil 41, die Leitung 40, der Kocher 1, die Leitung 20 bis zum Expansionsventil 22.

## Patentansprüche

1. Verfahren zum Regeln einer Sorptionswärmepumpe mit einem Austreiber, der von einem über einen mit einem Brennstoffventil versehene Brennstoffzufuhrleitung gespeisten Brenner beheizt ist, einem Kondensator, einem Drosselorgan, einem Rückführorgan für ein Lösungsmittel sowie einem Verdampfer und einem Verbraucher, dessen Kreislauf über Wärmetauscher aufgeheizt wird, die dem Kondensator sowie einem Absorber zugeordnet sind, und wobei als Regelgröße der Druck oder die Temperatur im Hochdruckteil der Sorptionswärmepumpe vorgesehen sind, dadurch gekennzeichnet, daß als zusätzliche Meßgröße die Temperatur (28) der den Verdampfer (26) speisenden Wärmequelle (27) erfasst ist, daß parallel zu einer Verstellung des Kältemitteldampf-Durchsatzes durch den Verdampfer der Durchsatz von armer Lösung hierzu invers verstellt wird, daß der Durchsatz von Kältemitteldampf durch den Verdampfer (26) mit einer Änderung der Temperatur der den Verdampfer speisenden Wärmequelle verstellt wird, daß die Ableitung im Verdampfer nicht benötigten Kältemittels stromab des Kondensators (11) unmittelbar in den Austreiber erfolgt, daß ausgangsseitig des Verdampfers (31) ein Temperaturfühler (30) vorgesehen ist, der mit einem Regler (25) verbunden ist, dessen Stellglied (23) den Öffnungsquerschnitt des Expansionsventils (22) beherrscht, das dem Verdampfer kältemitteldampfseitig vorgeschaltet ist.

2. Verfahren nach Anspruch eins, dadurch gekennzeichnet, daß als weitere Meßgröße das Niveau im Inneren des Verdampfers (26) abgefühlt wird, die zusammen mit dem Temperaturwert des Fühlers (30) auf den Regler (25) einwirkt.

3. Verfahren nach Anspruch eins, dadurch gekennzeichnet, daß zusätzlich das Niveau im Inneren (2) des Austreibers (1) abgefühlt wird, das zusammen mit dem Temperaturwert der Fühler (30) auf den Regler (25) einwirkt.

## Claims

1. A method of controlling a sorption heat pump comprising a generator, which is heated by a burner fed from a fuel supply line provided with a fuel valve, a condenser, a throttle valve, means for recycling a solvent, an evaporator and a consumer having a circuit which is heated via heat exchangers associated with the condenser and with an absorber, the controlled variable consisting of the pressure or the temperature in the high-pressure part of the sorption heat pump, characterized in that the temperature (28) of the heat source (27) feeding the evaporator (26) is measured as an additional variable, and adjustment of the throughput of refrigerant through the evaporator is accompanied by an inverse adjustment of the throughput of depleted solution, the throughput of refrigerant vapour through the evaporator (26) is adjusted in response to a change of the temperature of the heat source feeding the evaporator, refrigerant not required in the evaporator is discharged directly into the generator from a point which is downstream of the condenser (11), and a temperature sensor (30) is provided downstream of the evaporator (31) and is connected to a controller (25) having a final control element (23) controlling the free cross-section of the expansion valve (22), which precedes the evaporator in the flow path for the refrigerant vapour.

2. A method according to claim 1, characterized in that the level inside the evaporator (26) is measured as an additional variable, which together with the temperature measured by the sensor (30) acts on the controller (25).

3. A method according to claim 1, characterized in that the elvel inside (2) of the generator (1) is also measured and together with the temperature measured by the sensor (30) acts on teh controller (25).

## Revendications

1. Procédé pour la régulation d'une thermopompe à sorption avec un bouilleur chauffé par un brûleur alimenté par une conduite munie d'une soupape de combustible, un condenseur, un organe détendeur, un organe de retour pour un absorbant ainsi qu'un évaporateur et un récepteur dont le circuit est chauffé par des échangeurs de chaleur combinés avec le condenseur et un absorbeur, la grandeur réglante étant la pression ou la température dans la partie hp de la thermopompe à sorption, caractérisé par le fait que la température (28) de la source de chaleur (27) alimentant l'évaporateur (26) est prise comme grandeur de mesure supplémentaire, que, parallèlement à la variation opérée sur le débit de frigorigène gazeux à travers l'évaporateur, le débit de solution pauvre est modifiée, mais de façon inverse, que le débit de frigorigène à travers l'évaporateur (26) est modifié en fonction de la variation de la température de la source de chaleur alimentant l'évaporateur, que le frigorigène non utilisé dans l'évaporateur est canalisé, en aval du condenseur (11), directement dans le bouilleur, qu'à la sortie (31) de l'évaporateur est prévue une sonde thermométrique (30) reliée à un régulateur (25) dont l'organe (23) agit sur la section de passage du détendeur (22) en amont de l'évaporateur.

2. Procédé suivant la revendication un, caractérisé par le fait que le niveau à l'intérieur de l'évaporateur (26) est pris comme une autre grandeur de mesure qui, en combinaison avec la valeur mesurée par la sonde thermométrique (30), agit sur le régulateur (25).

3. Procédé suivant la revendication un, caractérisé par le fait que, de plus, le niveau à l'intérieur (2) du bouilleur (1) est contrôlé et agit, en combinaison avec la valeur relevée par la sonde thermométrique (30) sur le régulateur (25).